# EUROPEAN PATENT APPLICATION

(11) **EP 3 093 151 A1**
(43) Date of publication of application: **16.11.2016**
(21) Application number: 14887761.6
(22) Date of filing: 25.12.2014
(51) Int. Cl.: B41J 29/38, B41J 3/36

(54) **PRINTER**

(30) Priority: 31.03.2014 JP 2014071347
(71) Applicant: Sato Holdings Kabushiki Kaisha, Tokyo 153-0064 (JP)
(72) Inventor: YOSHIZAWA, Koji, Tokyo 153-0064 (JP); WAKAMATSU, Kazuhito, Tokyo 153-0064 (JP)
(74) Representative: Grünecker Patent- und Rechtsanwälte PartG mbB
(86) International application number: PCT/JP2014/084366
(87) International publication number: WO 2015/151364

(57) **Abstract**

A printer includes a first CPU, a second CPU that executes processing different from processing executed by the first CPU, and a monitor target that outputs a signal indicating that a specific state has been reached to the first and second CPUs. The first and second CPUs are both configured to be capable of monitoring the signal from the monitor target. In a non-sleep state, the second CPU monitors the monitor target. In a sleep state, the first CPU monitors the monitor target.

## Description

### TECHNICAL FIELD

The present invention relates to a printer, such as a label printer, that can be shifting into a sleep state to save power.

### BACKGROUND ART

Conventional printers reduce power consumption by shifting to a sleep mode, in which only power for restarting is consumed, when a certain condition is met, e.g., when no printing command has been issued or no key operation has been performed for a certain time period.

For example, JP 2010-149405A discloses a sleep mode in a portable printer.

### SUMMARY OF INVENTION

In conventional printers, a shift to a sleep state makes a sensor that monitors opening/closing of a cover and opening/closing of a head incapable of operating, even if the cover is opened/closed and the head is opened/closed, for example. Therefore, even if the cover is opened/closed and the head is opened/closed, for example, conventional printers cannot return from the sleep state to a normal state.

The present invention aims to provide a printer that can return to a normal state on the occurrence of a change in a specific monitor target, such as opening/closing of a cover and opening/closing of a head, even during a sleep mode.

A first aspect of the present invention provides a printer that is capable of shifting to a sleep state while in a standby state where printing is not performed, and includes: a first computation processing unit; a second computation processing unit configured to execute processing different from processing executed by the first computation processing unit; and a monitor target configured to output a signal indicating that a specific state has been reached to the first computation processing unit and the second computation processing unit. The first computation processing unit and the second computation processing unit are both configured to be capable of monitoring the signal from the monitor target. In a non-sleep state, the second computation processing unit monitors the monitor target. In the sleep state, the first computation processing unit monitors the monitor target.

A second aspect of the present invention provides the printer according to the first aspect, wherein the monitor target includes at least one selected from a watchdog timer and a sensor configured to be detecting opening/closing of at least a part of a housing.

A third aspect of the present invention provides the printer according to the first or second aspect, wherein the first computation processing unit manages a graphical user interface in the non-sleep state, and the second computation processing unit controls a printing head and a motor in the non-sleep state, and reduces power consumption in the sleep state.

A fourth aspect of the present invention provides the printer according to the first aspect, wherein the second computation processing unit shifts to the sleep state in response to a first instruction issued from the first computation processing unit to the second computation processing unit for starting the sleep state, and returns to the non-sleep state in response to a second instruction issued from the first computation processing unit to the second computation processing unit for ending the sleep state, the first instruction is issued when no printing data has been received or no key operation has been performed for a certain time period, and the second instruction is issued upon opening/closing of a cover constituting a part of a housing of the printer, upon opening/closing of a thermal head configured to perform printing by applying heat to a thermosensitive color-developing layer, upon reception of the printing data, or upon performance of the key operation.

According to the above aspects, the printer can return to a normal state on the occurrence of a change in a specific monitor target, such as opening/closing of a cover and opening/closing of a head, even during a sleep mode.

### BRIEF DESCRIPTION OF DRAWINGS

FIG. 1 is a block diagram showing a configuration of a printer according to an embodiment of the present invention.
FIG. 2 is a flowchart showing the flow of an error check in a non-sleep state.
FIG. 3 is a flowchart illustrating an operation to monitor a sensor in a sleep mode.

### DESCRIPTION OF EMBODIMENTS

The following describes an embodiment of the present invention with reference to the drawings and the like.

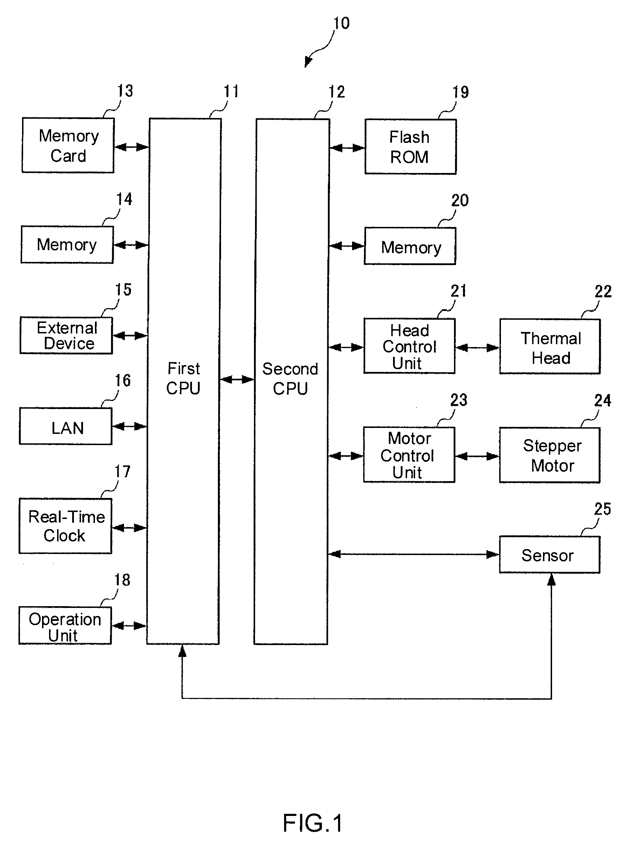

FIG. 1 is a block diagram showing a configuration of an embodiment of a printer pertaining to the present invention.

Although the following description provides specific numerical values, configurations, and the like, they can be changed where appropriate.

In the present specification and the claims, output of various types of information by a thermal head is expressed as "printing" as in a normal practice by a person skilled in the art. Note that the expression "printing," which refers to output of information by the thermal head as just mentioned, is not limited to meaning output of characters, and has a broad meaning including output of graphics (e.g., barcodes), images, and so on.

A printer 10 according to the present embodiment is a label printer that performs printing on a label with the use of a thermal head 22. The printer 10 includes a first central processing unit (CPU) 11, a second CPU 12, a memory card unit 13, a memory 14, an external device connection unit 15, a LAN connection unit 16, a real-time clock (RTC) unit 17, an operation unit 18, a Flash ROM 19, a memory 20, a head control unit 21, the thermal head 22, a motor control unit 23, a stepper motor 24, and a sensor 25.

The first CPU 11 is a main CPU serving as a first computation processing unit that executes principal computation processing for the printer 10.

The second CPU 12 is a sub-CPU serving as a second computation processing unit that auxiliary shares computation processing with the first CPU 11.

As the printer 10 according to the present embodiment includes these two computation processing units, i.e., the first CPU 11 and the second CPU 12, the printer 10 can execute parallel processing, thereby improving the throughput of in-printer processing.

The details of the first CPU 11 and the second CPU 12 will be described later.

The memory card unit 13 is a contact-type reader/writer to which a small memory card can be detachably attached, and is managed by the first CPU 11.

The memory 14 is connected to the first CPU 11, and serves as a working area for the first CPU 11.

The external device connection unit 15 is constituted by, for example, a USB terminal.

The LAN connection unit 16 is constituted by, for example, a LAN terminal and/or a wireless LAN communication apparatus.

The real-time clock unit 17 keeps time, even during a sleep and the like.

The operation unit 18 is constituted by, for example, operation buttons and/or a keyboard, or a touchscreen.

The Flash ROM19 is a non-volatile memory for storing various types of setting values and the like.

The memory 20 is connected to the second CPU 12, and serves as a working area for the second CPU 12.

Under control by the second CPU 12, the head control unit 21 generates control signals corresponding to printing data deployed to a printing deployment area in the memory 20. The printing data includes characters, symbols, barcodes, and the like to be printed. The head control unit 21 also provides the generated control signals to the thermal head 22 and controls the operations of the thermal head 22 during printing.

The thermal head 22 is arranged to face a non-illustrated platen roller, and includes heating elements that perform printing by applying heat to a thermosensitive color-developing layer of a label. The printer 10 performs printing on a printing surface of the label while feeding the label nipped between the thermal head 22 and the platen roller.

The motor control unit 23 controls the rotation of the non-illustrated platen roller by controlling the stepper motor 24, thereby controlling the feeding of the label during printing.

The stepper motor 24 feeds the label by rotating the platen roller via a non-illustrated timing belt and the like.

The sensor 25 detects opening/closing of an area of the thermal head 22, as well as opening/closing of a cover. The printer 10 according to the present embodiment is configured in such a manner that the cover, which is a part of a housing, is openable/closable. The printer 10 according to the present embodiment is also configured in such a manner that a head cover, which is configured as a part of the housing at a position different from a position of the aforementioned cover of the printer 10, is openable/closable. The sensor 25 is constituted by an optical sensor or a magnetic sensor that can detect opening/closing of one of the cover and the head cover. Note that individual sensors 25 may be provided in one-to-one correspondence with the cover and the head cover.

The present embodiment has a sleep mode to save power. A shift to the sleep mode is carried out on the condition that no printing data has been received and no key operation has been performed for a certain time period. If this condition is met, the supply of power to the second CPU 12 and various components controlled by the second CPU 12 is stopped to reduce power consumption. Hereinafter, a normal state other than a sleep state will be referred to as a non-sleep state and distinguished from the sleep state.

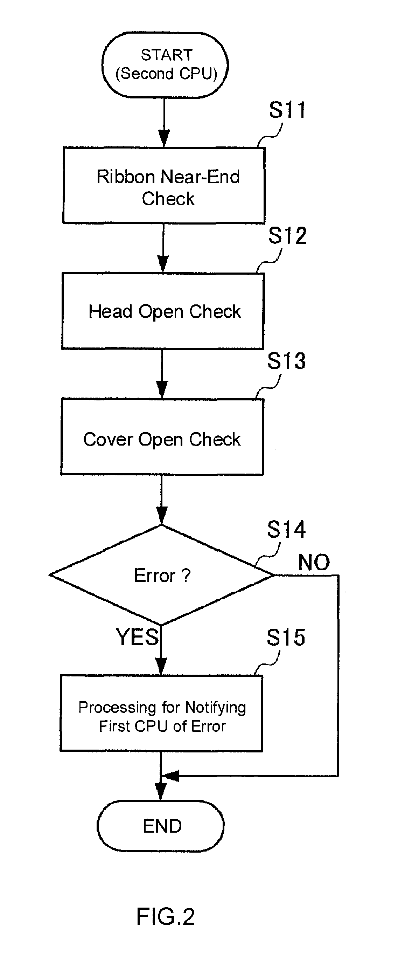

FIG. 2 is a flowchart showing the flow of an error check in the non-sleep state.

The error check denotes an operation to detect (check) a state where problems could possibly occur in a printing operation. As shown in FIG. 2 and will be described below, the second CPU 12 performs the error check in the non-sleep state.

In step (hereinafter, "S") 11, the second CPU 12 performs a ribbon near-end check. This is, for example, a check operation to detect whether a remaining amount of a non-illustrated ink ribbon is small by detecting a mark appended to the vicinity of an end of the ink ribbon.

In S12, the second CPU 12 performs a head open check. This head open check is performed by checking the output from sensor 25.

In S13, the second CPU 12 performs a cover open check. This cover open check is performed by checking the output from sensor 25. Therefore, practically, this S13 and the aforementioned S12 are executed as one operation step.

In S14, the second CPU 12 determines whether or not an error was found in any of the checks from S11 to S13, and the error check bifurcates in accordance with the determination result. When the error was found, the second CPU 12 proceeds to S15. When the error was not found, S15 is skipped, and the error check operation ends.

In S15, the second CPU 12 executes processing for notifying the first CPU 11 of the error. Thereafter, the error check operation ends.

As described above, in the printer 10, the second CPU 12 performs the error check in the non-sleep state. Therefore, in the non-sleep state, the second CPU 12 monitors the sensor 25 as a monitor target.

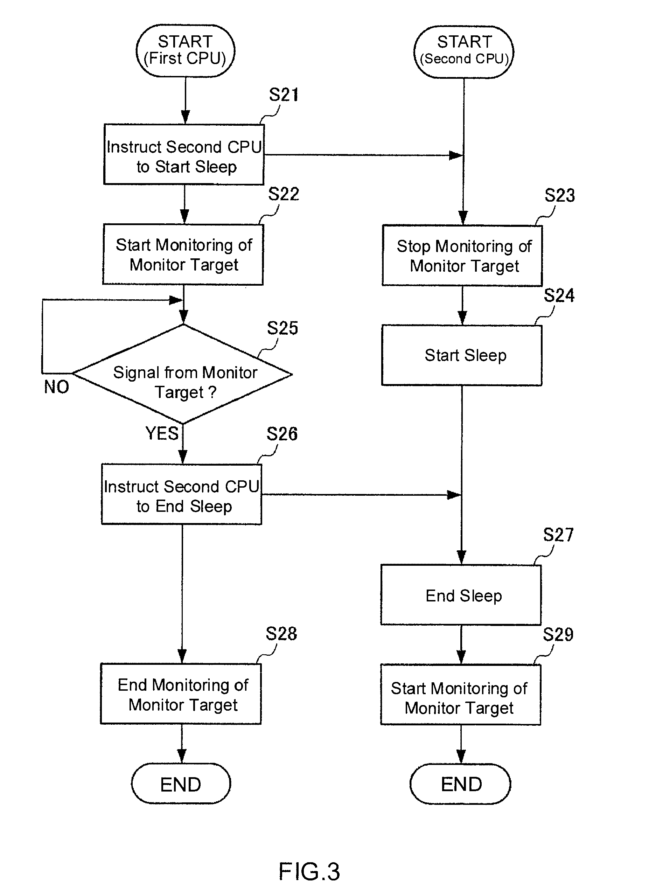

FIG. 3 is a flowchart illustrating an operation to monitor the sensor 25 in the sleep mode.

At the start of this flow, the printer 10 is in the non-sleep state, and thus the second CPU 12 monitors the sensor 25 as the monitor target to monitor the head open and the cover open as shown in FIG. 2.

In S21, When the condition to shift to the sleep mode is met, the first CPU 11 instructs the second CPU 12 to start the sleep mode.

In S22, the first CPU 11 starts monitoring of the monitor target, i.e., the sensor 25.

In S23, the second CPU 12 stops monitoring of the monitor target, i.e., the sensor 25, in synchronization with the foregoing S22.

In S24, the second CPU 12 starts the sleep mode. As a result, the supply of power to the second CPU 12 and components controlled by the second CPU 12 is stopped, and power consumption is reduced. Note that the foregoing S23 may be executed in response to the start of the sleep mode in the present S24.

In S25, the first CPU 11 determines whether or not there is a signal from the sensor 25, that is to say, sensor output (signal) generated upon opening/closing of the cover or head cover. When there is the signal, the first CPU 11 executes the next S26. On the other hand, when there is no signal, the present S25 is repeated.

In S26, the first CPU 11 instructs the second CPU 12 to end the sleep mode. This instruction is made to end the sleep and return to the normal state (non-sleep mode) in the presence of the signal from the sensor 25 in the previous S25. Note that a condition to end the sleep mode not only includes the presence of the signal reception from the sensor 25, that is to say, opening/closing of the cover or head cover, but also includes reception of printing data, and performance of a key operation.

In S27, the second CPU 12 ends the sleep mode.

In S28, the first CPU 11 ends monitoring of the monitor target, i.e., the sensor 25.

In S29, the second CPU 12 starts monitoring of the monitor target, i.e., the sensor 25, in synchronization with S28.

As described above, in the present embodiment, one CPU shifts to the sleep mode, and during the sleep mode, the other CPU that continues the operation takes over monitoring of a monitor target that was monitored by the CPU that shifted to the sleep mode. Therefore, even during the sleep mode for reducing power consumption, monitoring of the monitor target can be continued. Furthermore, even during the sleep mode, a return to the normal state is enabled on the occurrence of a change in a specific monitor target, such as opening/closing of the cover and opening/closing of the head.

Note that the present invention is not limited to the above-described embodiment. Various modifications and changes can be made, and such modifications and changes are included within the scope of the present invention.

In the description of the embodiment, the sensor 25 that detects opening/closing of the cover and head cover is used as an example of a monitor target. However, a monitor target is not limited to the sensor 25, and may be, for example, a watchdog timer. Alternatively, both of the sensor 25 and the watchdog timer may be monitor targets. Furthermore, sensors or similar elements other than the ones described above may be monitor targets.

The present application claims the benefit of priority from Japanese Patent Application No. 2014-71347, filed March 31, 2014 with the Japan Patent Office, the disclosure of which is incorporated herein by reference in its entirety.

## Claims

1. A printer capable of shifting to a sleep state while in a standby state where printing is not performed, the printer comprising:
a first computation processing unit;
a second computation processing unit configured to execute processing different from processing executed by the first computation processing unit; and
a monitor target configured to output a signal indicating that a specific state has been reached to the first computation processing unit and the second computation processing unit,
wherein
the first computation processing unit and the second computation processing unit are both configured to be capable of monitoring the signal from the monitor target,
in a non-sleep state, the second computation processing unit monitors the monitor target, and
in the sleep state, the first computation processing unit monitors the monitor target.

2. The printer according to claim 1,
wherein
the monitor target includes at least one selected from a watchdog timer and a sensor configured to be detecting opening/closing of at least a part of a housing.

3. The printer according to claim 1 or 2,
wherein
the first computation processing unit manages a graphical user interface in the non-sleep state, and
the second computation processing unit controls a printing head and a motor in the non-sleep state, and reduces power consumption in the sleep state.

4. The printer according to claim 1,
wherein
the second computation processing unit shifts to the sleep state in response to a first instruction issued from the first computation processing unit to the second computation processing unit for starting the sleep state, and returns to the non-sleep state in response to a second instruction issued from the first computation processing unit to the second computation processing unit for ending the sleep state, the first instruction is issued when no printing data has been received or no key operation has been performed for a certain time period, and the second instruction is issued upon opening/closing of a cover constituting a part of a housing of the printer, upon opening/ closing of a thermal head configured to perform printing by applying heat to a thermosensitive color-developing layer, upon reception of the printing data, or upon performance of the key operation.
